# EUROPEAN PATENT APPLICATION

(11) **EP 4 521 711 A1**
(43) Date of publication of application: **12.03.2025**
(21) Application number: 23822769.8
(22) Date of filing: 14.04.2023
(51) Int. Cl.: H04L 51/10, G06F 11/36

(54) **COMMUNICATION METHOD, APPARATUS AND SYSTEM**

(30) Priority: 15.06.2022 CN 202210682078
(71) Applicant: Huawei Technologies Co., Ltd., Shenzhen, Guangdong 518129 (CN)
(72) Inventor: CHAI, Xiaoqian, Shenzhen, Guangdong 518129 (CN)
(74) Representative: Maiwald GmbH
(86) International application number: PCT/CN2023/088429
(87) International publication number: WO 2023/241198

(57) **Abstract**

A communication method, apparatus, and system are provided. The communication method includes: A rich media message terminal obtains first information, where the first information includes information about a first rich media message mini app and/or the first rich media message mini app; the rich media message terminal sends a first request message to a first mini app management platform that is capable of providing a rich media message mini app verification function, to request to perform verification on the first rich media message mini app, where the first request message includes a part or all of the first information; and the rich media message terminal receives a first response message from the first mini app management platform, where the first response message includes a result of verification on the first rich media message mini app, and the rich media message terminal performs a subsequent operation on the first rich media message mini app based on the verification result. According to the method, a user can run the obtained rich media message mini app in a secure and controllable environment, to avoid a risk and a loss to the user.

## Description

This application claims priority to Chinese Patent Application No. 202210682078.0, filed with the China National Intellectual Property Administration on June 15, 2022 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

In a rich media message system, a sender can send a message to a recipient without consent from the recipient. Currently, a threshold for developing mini apps is low. Therefore, many entities can develop and use the rich media message system to directly distribute a rich media message mini app to a user. Therefore, when an entity that develops the rich media message mini app or an obtaining source of the rich media message mini app is untrusted or it cannot be determined whether the entity that develops the rich media message mini app or the obtaining source of the rich media message mini app is trusted, directly running the received rich media message mini app by the user may bring a risk and a loss to the user.

### SUMMARY

Embodiments of this application provide a communication method, apparatus, and system, so that a user can run a rich media message mini app in a secure and controllable environment, to avoid a risk and a loss to the user.

According to a first aspect, a communication method is provided. The method may be performed by a rich media message terminal, or may be performed by a component (such as a chip or a circuit) of the rich media message terminal. This is not limited herein.

The method may include: A rich media message terminal obtains first information, where the first information includes information about a first rich media message mini app and/or the first rich media message mini app; the rich media message terminal sends a first request message to a first mini app management platform, where the first request message includes a part or all of the first information, the first request message is used to request the first mini app management platform to perform verification on the first rich media message mini app, and the first mini app management platform is a mini app management platform that is capable of providing a rich media message mini app verification function; the rich media message terminal receives a first response message from the first mini app management platform, where the first response message includes a result of verification performed by the first mini app management platform on the first rich media message mini app; and the rich media message terminal performs a corresponding operation on the first rich media message mini app based on the verification result.

Based on the foregoing technical solution, the rich media message terminal may interact with the first mini app management platform to perform verification on the first rich media message mini app, and perform the corresponding operation on the first rich media message mini app based on the verification result. According to the method, a user can run the obtained rich media message mini app in a secure and controllable environment, to avoid a risk and a loss to the user.

With reference to the second aspect, in some implementations of the second aspect, the first request message is used to request the first mini app management platform to perform verification on security of the first rich media message mini app, or the first request message is used to request the first mini app management platform to verify whether the rich media message terminal is allowed to run the first rich media message mini app.

With reference to the first aspect, in some implementations of the first aspect, the method further includes: The rich media message terminal determines, based on the first information, to request the first mini app management platform to perform verification on the first rich media message mini app.

With reference to the first aspect, in some implementations of the first aspect, that the rich media message terminal determines, based on the first information, to request the first mini app management platform to perform verification on the first rich media message mini app includes: The rich media message terminal obtains second information, where the second information includes security source information of the rich media message mini app and/or a public key used for verification on a signature of the first rich media message mini app, or the second information includes a verification strategy, and the verification strategy indicates that the first mini app management platform needs to be requested to perform verification on the first rich media message mini app; and the rich media message terminal determines, based on the first information and the second information, to request the first mini app management platform to perform verification on the first rich media message mini app.

With reference to the first aspect, in some implementations of the first aspect, that the rich media message terminal determines, based on the first information and the second information, to request the first mini app management platform to perform verification on the first rich media message mini app includes: When a sender identifier of the first information is not included in the security source information, the rich media message terminal determines to request the first mini app management platform to perform verification on the first rich media message mini app; or when verification on the signature in the information about the first rich media message mini app by using the public key fails, the rich media message terminal determines to request the first mini app management platform to perform verification on the first rich media message mini app; or when the verification strategy indicates to request the first mini app management platform to perform verification on the first rich media message mini app, the rich media message terminal determines to request the first mini app management platform to perform verification on the first rich media message mini app.

Based on the foregoing technical solution, a user of the rich media message terminal may flexibly set the second information, and the rich media message terminal determines, based on the setting of the user, whether to request the first mini app management platform to perform verification on the first rich media message mini app, to improve user experience.

With reference to the first aspect, in some implementations of the first aspect, that a rich media message terminal obtains first information includes: The rich media message terminal obtains the first information from a second mini app management platform, or the rich media message terminal obtains the first information from a management platform other than a second mini app management platform, or the rich media message terminal obtains the first information from a rich media device other than the rich media terminal.

With reference to the first aspect, in some implementations of the first aspect, that the rich media message terminal obtains the first information from a second mini app management platform includes: The rich media message terminal obtains a uniform resource locator URL corresponding to the second mini app management platform; and the rich media message terminal obtains a web (web) page corresponding to the URL, where the web page includes the first information and/or a mini app query entry, and the mini app query entry is used to obtain the first information.

With reference to the first aspect, in some implementations of the first aspect, that a rich media message terminal obtains first information includes: The rich media message terminal receives a first rich media message, where the first rich media message includes the first information.

For example, the first rich media message may be actively sent by another device or platform to the rich media message terminal, or the rich media message terminal first sends a query message related to the first rich media message mini app to another device or platform, and the another device or platform returns the first rich media message including a query result to the rich media message terminal.

With reference to the first aspect, in some implementations of the first aspect, the verification result includes one of the following: a first verification result, a second verification result, a third verification result, and a fourth verification result, where the first verification result indicates that verification on the first rich media message mini app succeeds, the second verification result indicates that verification on the first rich media message mini app fails, the third verification result indicates that verification on the first rich media message mini app partially succeeds, and the fourth verification result is locally stored information about a rich media message mini app and/or the rich media message mini app that are/is obtained by the first mini app management platform through query based on the first request message.

Based on the foregoing technical solution, the first mini app management platform performs hierarchical verification on the first rich media message mini app, and the rich media message terminal may perform different operations based on different verification results returned by the first mini app management platform, to improve user experience.

With reference to the first aspect, in some implementations of the first aspect, the verification result is the first verification result or the fourth verification result, and that the rich media message terminal performs a corresponding operation on the first rich media message mini app based on the verification result includes: The rich media message terminal runs the first rich media message mini app based on the verification result; or the verification result is the second verification result or the third verification result, and that the rich media message terminal performs a corresponding operation on the first rich media message mini app based on the verification result includes: The rich media message terminal determines, based on a user indication or a local security setting, to run the first rich media message mini app; or the rich media message terminal determines, based on a user indication or a local security setting, to refuse to run the first rich media message mini app.

With reference to the first aspect, in some implementations of the first aspect, the verification result is the first verification result or the fourth verification result, and that the rich media message terminal performs a corresponding operation on the first rich media message mini app based on the verification result includes: The rich media message terminal provides user information for the first rich media message mini app, where the user information is information related to a user corresponding to the rich media message terminal, and indicates the user of the first rich media message mini app.

Based on the foregoing technical solution, the rich media message terminal may provide the user information of the rich media message terminal for the first rich media message mini app based on the verification result of the first rich media message mini app, so that the user uses a service of the first rich media message mini app without verification. According to the method, it is ensured that the first rich media message mini app can be run, and it is convenient for the user to use the first rich media message mini app.

According to a second aspect, a communication method is provided. The method may be performed by a first mini app management platform, or may be performed by a component (such as a chip or a circuit) of the first mini app management platform. This is not limited.

The method may include: The first mini app management platform receives a first request message from a rich media message terminal, where the first request message includes a part or all of first information, the first information includes information about a first rich media message mini app and/or the first rich media message mini app, the first request message is used to request the first mini app management platform to perform verification on the first rich media message mini app, and the first mini app management platform is a mini app management platform that is capable of providing rich media message mini app verification; the first mini app management platform performs verification on the first rich media message mini app based on the first request message, to obtain a verification result; and the first mini app management platform sends a first response message to the rich media message terminal, where the first response message includes the verification result.

Based on the foregoing technical solution, the first mini app management platform receives the first request message that is sent by the rich media message terminal and that requests to perform verification on the first rich media message mini app. The first mini app management platform interacts with the rich media message terminal to perform verification on the first rich media message mini app, and returns the verification result. According to the method, a user can run the obtained rich media message mini app in a secure and controllable environment, to avoid a risk and a loss to the user.

With reference to the second aspect, in some implementations of the second aspect, the first request message is used to request the first mini app management platform to perform verification on security of the first rich media message mini app, or the first request message is used to request the first mini app management platform to verify whether the rich media message terminal is allowed to run the first rich media message mini app.

With reference to the second aspect, in some implementations of the second aspect, that the first mini app management platform performs verification on the first rich media message mini app based on the first request message, to obtain a verification result includes: The first mini app management platform queries, based on the first request message, information that is about a rich media message mini app and that is stored locally on the first mini app management platform; and the first mini app management platform obtains the verification result based on a query result.

With reference to the second aspect, in some implementations of the second aspect, if the first mini app management platform is capable of finding, based on the first request message, the information that is about the rich media message mini app and that is stored locally on the first mini app management platform, the verification result includes a fourth verification result, and the fourth verification result is the information about the rich media message mini app and/or the rich media message mini app that are/is stored locally on the first mini app management platform. Alternatively, if the first mini app management platform is capable of locally finding the information about the first rich media message mini app, the information that is about the rich media message mini app and that is stored locally on the first mini app management platform is compared with the first request message to obtain the verification result. The verification result includes a first verification result, a second verification result, or a third verification result, where the first verification result indicates that verification on the first rich media message mini app succeeds, the second verification result indicates that verification on the first rich media message mini app fails, and the third verification result indicates that verification on the first rich media message mini app partially succeeds.

With reference to the second aspect, in some implementations of the second aspect, that the first mini app management platform performs verification on the first rich media message mini app based on the first request message, to obtain a verification result includes: The first mini app management platform locally obtains third information, where the third information includes subscription information and/or configuration information corresponding to the rich media message terminal; and the first mini app management platform obtains the verification result based on the first request message and the third information.

For example, the subscription information corresponding to the rich media message terminal is an agreement signed between a user of the rich media message terminal and a rich media message service provider (for example, an operator) for providing and using a service. The subscription information may include whether the user of the rich media message terminal uses, for a fee or free of charge, a rich media message mini app service provided by the operator, or a provider that provides a rich media message mini app that can be used by the user of the rich media terminal. The configuration information may be information configured by the operator unilaterally in a rich media message system. For example, a user, of a type, of the rich media message terminal is allowed to use the rich media message mini app service in some areas or a time period, or the rich media message terminal can run only a rich media message mini app provided by the operator, or the rich media message terminal can run only a rich media message mini app obtained from an operator platform.

With reference to the second aspect, in some implementations of the second aspect, that the first mini app management platform performs verification on the first rich media message mini app based on the first request message, to obtain a verification result includes: The first mini app management platform obtains the first rich media message mini app based on the first request message; the first mini app management platform performs security scanning on the obtained first rich media message mini app; and the first mini app management platform obtains the verification result based on a scanning result.

With reference to the second aspect, in some implementations of the second aspect, the verification result includes a first verification result, a second verification result, or a third verification result, where the first verification result indicates that verification on the first rich media message mini app succeeds, the second verification result indicates that verification on the first rich media message mini app fails, and the third verification result indicates that verification on the first rich media message mini app partially succeeds.

Based on the foregoing technical solution, the first mini app management platform performs hierarchical verification on the first rich media message mini app, and the rich media message terminal may perform different operations based on different verification results returned by the first mini app management platform, to improve user experience.

With reference to the first aspect and the second aspect, in some implementations, the information about the first rich media message mini app includes at least one of the following: a download address of the first rich media message mini app, an identifier of the first rich media message mini app, a name of the first rich media message mini app, an address of an icon of the first rich media message mini app, a version of the first rich media message mini app, developer information of the first rich media message mini app, provider information of the first rich media message mini app, signature information of a developer of the first rich media message mini app, and signature information of a provider of the first rich media message mini app.

With reference to the first aspect and the second aspect, in some implementations, the first request message and the response of the first request message are rich media messages.

According to a third aspect, a communication apparatus is provided. The apparatus is configured to perform the method according to any one of the possible implementations of the first aspect or the second aspect. Specifically, the apparatus may include a unit and/or a module, for example, a processing unit and/or a communication unit, configured to perform the method in any one of the possible implementations of the first aspect or the second aspect.

In an implementation, the apparatus is a communication device (such as a rich media message terminal or a mini app management platform). When the apparatus is the communication device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (such as a rich media message terminal or a mini app management platform). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus includes at least one processor, configured to execute a computer program or instructions stored in a memory, to perform the method in any one of the possible implementations of the first aspect or the second aspect. Optionally, the apparatus further includes a memory, configured to store the computer program or the instructions. Optionally, the apparatus further includes a communication interface, and the processor reads, through the communication interface, the computer program or the instructions stored in the memory.

In an implementation, the apparatus is a communication device (such as a rich media message terminal or a mini app management platform).

In another implementation, the apparatus is a chip, a chip system, or a circuit used in a communication device (such as a rich media message terminal or a mini app management platform).

According to a fifth aspect, a processor is provided, and is configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code to be executed by user equipment, and the program code includes the method in any one of the possible implementations of the first aspect or the second aspect.

According to a seventh aspect, a computer program product including instructions is provided. When the computer program product is run on a computer, the computer is enabled to perform the method in any one of the possible implementations of the first aspect or the second aspect.

According to an eighth aspect, a communication system is provided, and includes at least one of the rich media message terminal, the first mini app management platform, and the second mini app management platform above.

### BRIEF DESCRIPTION OF DRAWINGS

FIG. 1 is a diagram of a communication system applicable to an embodiment of this application;
FIG. 2 is a diagram of another communication system applicable to an embodiment of this application;
FIG. 3 is a diagram of another communication system applicable to an embodiment of this application;
FIG. 4 is a diagram of another communication system applicable to an embodiment of this application;
FIG. 5 is a diagram of a communication method according to an embodiment of this application;
FIG. 6 is a diagram of obtaining information about a first rich media message mini app according to an embodiment of this application;
FIG. 7 is another diagram of obtaining information about a first rich media message mini app according to an embodiment of this application;
FIG. 8 is a diagram of a communication apparatus 1100 according to an embodiment of this application; and
FIG. 9 is a diagram of another communication apparatus 1200 according to an embodiment of this application.

### DESCRIPTION OF EMBODIMENTS

The following describes technical solutions in embodiments of this application with reference to accompanying drawings.

The technical solutions in embodiments of this application may be applied to various communication systems, for example, a 5th generation (5th generation, 5G) system or a new radio

(new radio, NR) system. The technical solutions provided in this application may be further applied to a future communication system, for example, a 6th generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine-type communication (machine-type communication, MTC), an internet of things (internet of things, IoT) communication system, or another communication system.

To facilitate understanding of embodiments of this application, terms used in this application are first briefly described.
1. A rich communication services (Rich Communication Services, RCS) message complies with rich communication convergence.07 (rich communication convergence.07, RCC.07) and rich communication convergence.71 (rich communication convergence.71, RCC.71) standards released by a global system for mobile communications association (global system for mobile communications association, GSMA). The RCS message is an upgrade of a conventional SMS message. The RCS message inherits advantages such as a classic message service number system, carrier-grade verification, wide coverage, and a high reach rate, and is implemented based on a GSMA RCS and related standards. The RCS message breaks through limitations on an information length and a content format of the conventional SMS message, and supports a plurality of media formats such as text, picture, audio, video, location, contact, and document. A messaging as a platform (messaging as a platform, MaaP) platform is introduced, to promote convergence of vertical industries in the information and communication industry.

For a terminal user, the RCS message can provide a point to point message and a group chat service. In addition to text, a content format of the RCS message may further support a plurality of formats such as picture, audio, video, location, and contact. For an industry customer, the RCS message can provide an enhanced message service between an individual and an application, to implement "messaging as a platform". In addition, a new message interaction mode, namely, chatbot, is introduced, which connects to a terminal in a manner of a message dialog and may provide services such as search, discovery, interaction, and payment in a dialog box. In this way, an interaction service between the industry customer such as an enterprise and the terminal user is implemented.

For example, a rich media message may be referred to as an RCS message or a 5G message. The rich media message may be used between internet of things devices. Therefore, the rich media message may also be referred to as a 5G internet of things message. It may be understood that, a specific name of the message does not limit the protection scope of embodiments of this application. For a uniform description, the following provides a description by using the rich media message.

2. A chatbot (Chatbot) is a display form of an industry message application in a rich media message, simulates human beings to make an intelligent conversation, and provides an industry message service function for a user.

3. A mini app (Mini App) is an application that is implemented based on a web technology (web technology) (for example, JavaScript), that can run in a host mobile application (or a host client) on a terminal device, and that does not need to be installed on the terminal device. The host mobile application (or the host client) is an application installed on the terminal device, and a plurality of (types of) mini apps usually can run in the host application.

4. A rich media message mini app is a mini app that uses a rich media message application (or a rich media message client) running on a terminal device (or referred to as a rich media message terminal) as a host application (or a host client). In other words, the rich media message mini app is downloaded by the rich media message application from a network side and is then directly run (for example, explained and executed), and does not need to be installed on the terminal device. A user needs to run and access the rich media message mini app through the rich media message client. A built-in mini app engine (used to explain and execute the rich media message mini app) in the rich media message application is decoupled from the rich media message mini app. For example, both the mini app engine and the rich media message mini app may be upgraded independent of each other. After the rich media message mini app is run, the rich media message mini app may interact with a server corresponding to the rich media mini app, to implement handling of other services (for example, services such as bank card balance query, bank card transfer, wealth management product purchase, and credit card repayment). These services are referred to as "rich media message mini app services" in embodiments of this application.

5. A WebView (WebView) can be simply considered as a browser control that can be nested on an interface. A user usually browses a web page by using a browser. The WebView is an embedded browser nested in a native application, and the user may not be aware of using the browser. A conventional browser includes two parts: a UI (an address bar and a navigation bar) and a browser engine. The WebView is a browser engine in the native application. The WebView is only a visual component and is used as a visual part of the native app. Content displayed in the WebView does not need to be stored locally and can be directly obtained from a server. JS code running in the WebView can invoke a native system API, which is different from a limitation of a conventional browser sandbox.

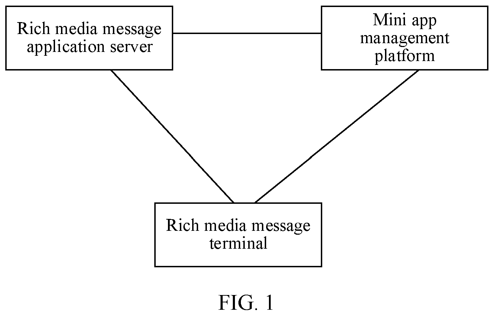

For ease of understanding of embodiments of this application, a communication system applicable to embodiments of this application is described in detail below with reference to FIG. 1 to FIG. 4.

FIG. 1 is a diagram of a communication system applicable to an embodiment of this application. As shown in FIG. 1, the communication system may include a rich media message application server, a mini app management platform, and a rich media message terminal. The rich media message terminal may directly communicate with the mini app management platform, or the rich media message terminal may communicate with the mini app management platform through the rich media message application server. The following briefly describes devices.
1. A rich media message terminal represents a digital mobile communication terminal that supports a rich media message service. Generally, a rich media message client is installed on the rich media message terminal. In other words, the rich media message terminal supports the rich media message service through the rich media message client.

It can be understood that, the rich media message terminal is only a name, and such a terminal may also be generally referred to as: a terminal device, user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The rich media message terminal may be a device that provides voice/data for a user, for example, a handheld device or a vehicle-mounted device with a wireless connection function. Currently, examples of some rich media message terminals are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a wearable device, a terminal device in a 5G network, a terminal device in a future evolved public land mobile network (public land mobile network, PLMN), or the like. This is not limited in embodiments of this application.

By way of example but not limitation, in embodiments of this application, the rich media message terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that are dedicated to only one type of application function and need to be used together with other devices such as smartphones, such as various smart bands or smart jewelry used for monitoring physical signs.

In embodiments of this application, an apparatus configured to implement a function of the rich media message terminal may be the rich media message terminal, or may be an apparatus that can support the rich media message terminal in implementing the function, for example, a chip system or a chip. The apparatus may be installed in the rich media message terminal. In embodiments of this application, the chip system may include a chip, or may include a chip and another discrete component.

In addition, the rich media message terminal may also be referred to as a 5G message terminal or an RCS client (RCS client). For a uniform description, the following provides a description by using the rich media message terminal.

2. A rich media message client is an application or a client that has a rich media message service function, has a built-in mini app engine, and can be for querying information about a rich media message mini app from a network side, downloading the rich media message mini app, and running, explaining, and executing the rich media message mini app. For ease of understanding, the rich media message client is referred to as a host client of the rich media message mini app.

3. A rich media message application server is a platform established by a telecom operator to connect to an industry customer, and is mainly configured to implement functions such as access management and authentication of a chatbot and a message of an industry customer, and upload and storage of multimedia content in an industry message, so that the industry customer can provide message services in a plurality of media formats for a user. The rich media message application server may further support permission verification on a rich media message mini app service, that is, determine whether a rich media message terminal is allowed to use the rich media message mini app service.

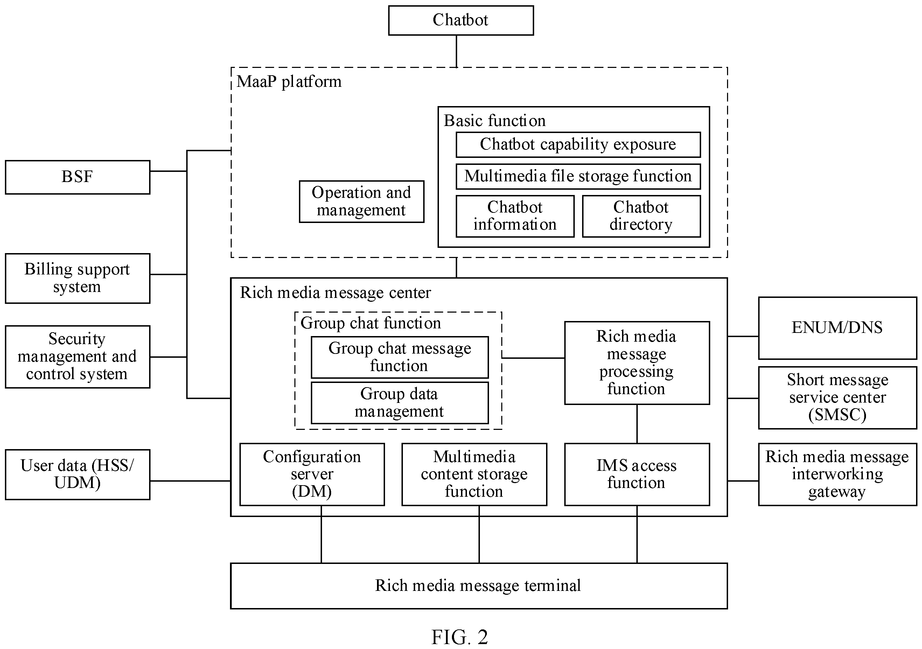

For example, the rich media message application server may be a MaaP platform or an internet of things message center. The MaaP platform may also be referred to as a chatbot platform (Chatbot platform), and a name of the MaaP platform does not limit the protection scope of embodiments of this application. For a uniform description, the following provides a description by using the MaaP platform. For a specific description of the MaaP platform, refer to FIG. 2 for a detailed description below.

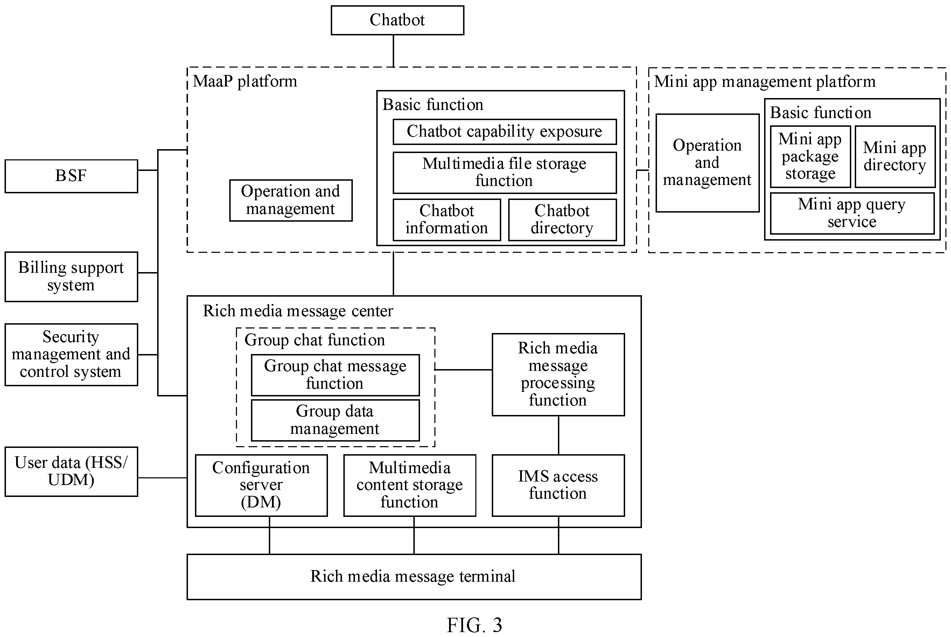

4. A mini app management platform is mainly used to be responsible for reviewing, verifying, and releasing of a rich media message mini app, summarizing and storing rich media message mini app information, providing a rich media message mini app query service for a terminal device, storing a rich media message mini app package, and the like. The mini app management platform may also be referred to as a mini app management server, or referred to as a rich media mini app management server or a rich media mini app management platform. For a uniform description, the following provides a description by using the mini app management platform. For a specific description of the mini app management platform, refer to FIG. 3 for a detailed description below.

FIG. 2 is a diagram of another communication system applicable to an embodiment of this application. As shown in FIG. 2, an architecture of a rich media message system is used as an example of the communication system. The communication system may include a rich media message center, a MaaP platform, and a rich media message terminal. The rich media message center and the MaaP platform may be connected to user data management (for example, a home subscriber server (home subscriber server, HSS), a unified data management (unified data management, UDM) network element), and a short message service center (namely, a short message service center (short message service center, SMSC)), a rich media message interworking gateway, phone number mapping (E.164 Number URI Mapping, ENUM) or a domain name system (domain name system, DNS), a security management and control system, a service support system, a bootstrapping server (bootstrapping server function, BSF), or the like. For a possible form of the rich media message terminal, refer to the description of the terminal device in FIG. 1. Details are not described herein again. The following briefly describes other devices.
1. A rich media message center has a capability of processing a rich media message, connects to a MaaP platform, and provides an industry message function. As shown in FIG. 2, the rich media message center includes a plurality of logical functional modules. For example, the rich media message center includes a group chat function, an IP multimedia subsystem (IP multimedia subsystem, IMS) access function, a multimedia content storage function, and a configuration server. The logical functional modules included in the rich media message center may be independently deployed (that is, these logical functional modules may be deployed on different physical devices), or may be deployed together (that is, these functional modules are deployed on a same physical device, or are built in the rich media message center). This is not limited in embodiments of this application. Functions of the example logical functional modules included in the rich media message center are as follows:
   (1) An IMS access function is mainly responsible for signaling access and media access and forwarding of the rich media message of a user.
   (2) A rich media message processing function is mainly used to process receiving and sending of a personal message, an industry message, and an enhanced call message, and perform session management, message-related service function processing, and the like.
   (3) A multimedia content storage function is mainly used to store a multimedia message file sent by an individual user.
   (4) A configuration server, also referred to as device management (device management, DM), is mainly configured to store user service-related data, such as a protocol parameter and a service parameter. A rich media message terminal can access the configuration server to obtain the related data to perform service configuration on the rich media message terminal.
   (5) A group chat function may include a group chat message function and group data management. The group chat message function may be used to distribute a group chat message. The group data management may be used to implement functions such as creating a group, inviting others to join a group, deleting a group member, dismissing a group, transferring a permission of an administrator, setting a group name, and setting a group profile picture. In addition, the group data management may be further used to store and manage group chat-related data information, such as a group member list, a group name, a group profile picture, and a group member identity.
   The rich media message center may also be referred to as a 5G message center (5G message center, 5G MC) or an RCS service provider network (RCS service provider network). For a uniform description, the following provides a description by using the rich media message center.
2. A MaaP platform connects to a rich media message center, to provide an industry message function and bear an interactive rich media message service. As shown in FIG. 2, the MaaP platform may include a basic function and operation and management. The operation and management is mainly used by an operator to perform management such as enabling and permission configuration on a chatbot. The basic function may include the following example logical functional modules.
   (1) A chatbot directory is mainly used to summarize chatbot data information, provide algorithm services such as matching and sorting, process a chatbot discovery request from a user, and return a search result to the user.
   (2) Chatbot information is mainly used to store related information of the chatbot, and process chatbot information query from a user. The related information may include information about an enterprise that provides the chatbot, for example, a name, a trademark, a service type, and a contact method. The related information may further include information about the chatbot or an application, for example, chatbot usage, application usage, and developer information.
   (3) A multimedia file storage function is mainly used to store a multimedia message file delivered by the chatbot.
   (4) Chatbot capability exposure is mainly used to perform abstract encapsulation on rich media message capabilities together, to provide a message access capability for the chatbot.

Similarly, the logical functional modules included in the MaaP platform may be independently deployed, or may be deployed together. This is not limited in embodiments of this application.

FIG. 3 is a diagram of another communication system applicable to an embodiment of this application. As shown in FIG. 3, an architecture of a rich media message system is used as an example of the communication system. As shown in FIG. 3, in comparison with FIG. 2, a mini app management platform is added to the system shown in FIG. 3.

The mini app management platform may be a secure mini app management platform, or may be an insecure mini app management platform. The secure mini app management platform is provided by an operator, a third-party security entity, or the like. The insecure mini app management platform is provided by an industry customer, an insecure third-party entity, or the like. The mini app management platform may be independently deployed, or may be built in a 5G MC or deployed independent of the 5G MC (for example, deployed on a MaaP, or deployed independently, and can interwork with the 5G MC). This is not limited. The following describes logical functional modules that may be included in the mini app management platform.
(1) Operation and management is mainly used to check whether a rich media message mini app complies with a rich media message mini app development specification, perform verification on the rich media message mini app, and release the rich media message mini app. A user can query the rich media message mini app only after the rich media message mini app is released.
(2) Mini app package storage (namely, rich media message mini app package storage) is mainly used to store a rich media message mini app package.
(3) A rich media message mini app directory (namely, a rich media message mini app directory) is mainly used to summarize and store rich media message mini app information. The rich media message mini app information may include basic information of a rich media message mini app, for example, an identifier (identifier, ID), a name, an icon, and a version. The rich media message mini app information may further include detailed information of the rich media message mini app, for example, include a provider (an industry customer), a service type, a contact method, and a website of the rich media message mini app, and usage and developer information of the rich media message mini app.

It may be understood that, the mini app directory and a chatbot directory may be the same or may be different. This is not limited. An example in which the mini app directory and the chatbot are the same is used. In a possible case, the architecture of the rich media message system includes one directory. The directory may be used to summarize chatbot data information, that is, implement a function of the chatbot directory in FIG. 2, and may be further used to summarize and store the rich media message mini app information, that is, implement a function of the mini app directory in FIG. 3.

(4) A mini app query service (namely, a rich media message mini app query service) is mainly used to process a rich media message mini app query request from a rich media message terminal, provides algorithm services such as matching and sorting, and returns a query result to a user. The query result may include rich media message mini app information found based on a rich media message mini app keyword, for example, an ID, a name, an icon, or a version.

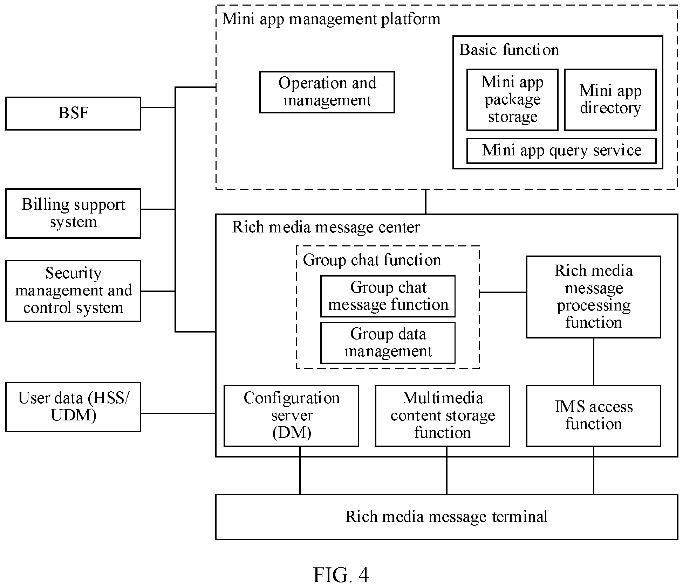

FIG. 4 is a diagram of another communication system applicable to an embodiment of this application. As shown in FIG. 4, an architecture of a rich media message system is used as an example of the communication system. As shown in FIG. 4, in comparison with FIG. 3, in the system shown in FIG. 4, a mini app management platform may directly connect to a rich media message center. For descriptions of various devices, refer to the foregoing descriptions. Details are not described herein again.

Currently, in the rich media message system, a sender can send a message to a recipient without consent from the recipient. A detailed procedure is as follows:
Step 1: The sender sends, through an IMS access function on a calling party side, a rich media message to a rich media message processing function to which a calling party belongs, and the calling party message processing function returns a response indicating that the rich media message has been received.
Step 2: The calling party rich media message processing function sends the rich media message to a rich media message processing function to which the recipient belongs, and the called party rich media message processing function returns a response indicating that the rich media message has been received.
Step 3: The called party rich media message processing function sends the rich media message to the recipient, and the recipient returns a response indicating that the rich media message is successfully received.
Step 4: The recipient sends a report delivery message to the calling party rich media message processing function hop by hop, and finally, the sender returns a response indicating that the report delivery is received to the calling party rich media message processing function.

Currently, a development threshold of a mini app is low. Therefore, many entities can develop and use the rich media message system to directly distribute a rich media message mini app to a user. Therefore, when an entity that develops the rich media message mini app is insecure or an obtaining source of the rich media message mini app is insecure, directly running the received rich media message mini app by the user brings a risk and a loss to the user.

In view of this, this application provides a communication method, to effectively resolve the foregoing technical problem. The following describes in detail the method provided in embodiments of this application with reference to the accompanying drawings.

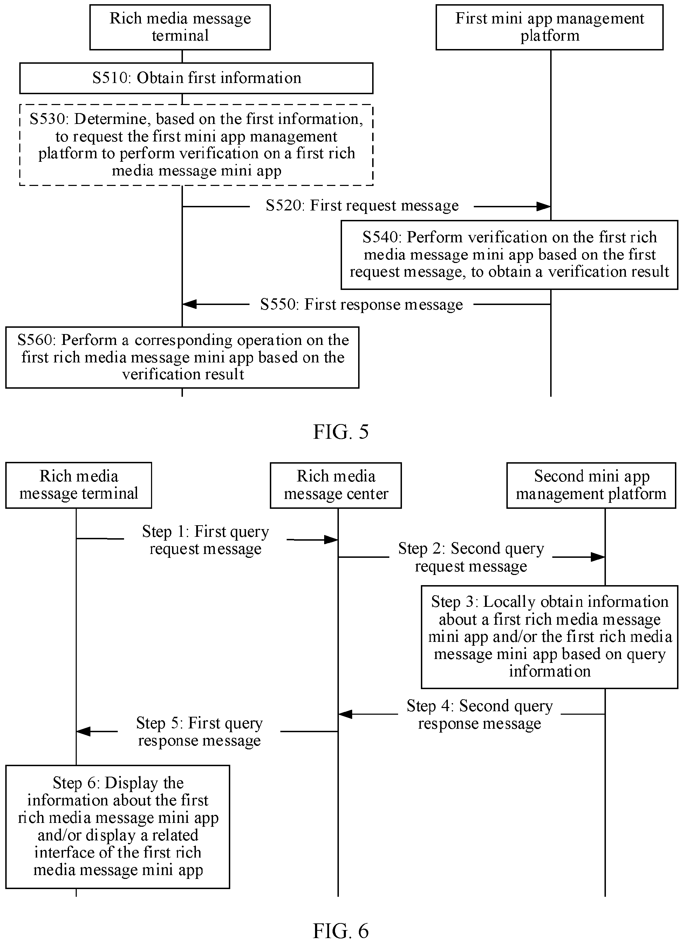

FIG. 5 is a diagram of a communication method according to an embodiment of this application. The method may include the following steps.

S510: A rich media message terminal obtains first information, where the first information includes information about a first rich media message mini app and/or the first rich media message mini app.

Optionally, the information about the first rich media message mini app includes a download address of the first rich media message mini app. In this way, the rich media message terminal (or a rich media message client in the rich media message terminal) may download the first rich media message mini app based on the download address of the first rich media message mini app.

Optionally, the information about the first rich media message mini app further includes at least one of the following: an identifier of the first rich media message mini app, a name of the first rich media message mini app, an address of an icon of a rich media message mini app, a version of the first rich media message mini app, developer information of the first rich media message mini app, provider information of the first rich media message mini app, a signature of a developer of the first rich media message mini app, and a signature of a provider of the first rich media message mini app. For example, the provider information of the first rich media message mini app may include at least one of the following: a trademark, a service type, a contact method, a website, and the like.

It may be understood that the foregoing is an example for description, and embodiments of this application are not limited thereto. For example, the information about the first rich media message mini app may further include at least one of the following: usage of the first rich media message mini app and a description of the first rich media message mini app.

For example, the rich media message terminal may obtain the first information in any one of the following manners.

Manner 1: The rich media message terminal obtains the first information from a second mini app management platform, where the second mini app management platform locally stores the information about the first rich media message mini app and/or the first rich media message mini app.

For example, the second mini app management platform sends the first rich media message mini app to the rich media message terminal in a rich media message file sending method.

It may be understood that, the second mini app management platform may be a trusted mini app management platform, or may be an untrusted mini app management platform. The trusted mini app management platform may be understood as a mini app management platform of an operator, a third-party mini app management platform trusted by the operator, or a third-party mini app management platform trusted by a provider (source). The untrusted mini app management platform may be understood as a third-party mini app management platform whose provider (source) is untrusted or whose trustworthiness cannot be determined.

It may be understood that, if the second mini app management platform is the trusted mini app management platform, a rich media message mini app stored on the second mini app management platform may be considered as a secure mini app. In this application, whether the rich media message mini app is secure means whether the rich media message mini app brings a risk and a loss to data security, terminal system security, privacy, and the like of a rich media message user. For example, if the first rich media message mini app is a secure mini app, it indicates that the mini app does not have a function of accessing the rich media message terminal without authorization, does not have a function of using or damaging the rich media message terminal without authorization, does not have a function of obtaining information about the rich media message terminal without authorization, does not have a function of modifying or damaging a file of the rich media message terminal, and the like.

In an implementation, the rich media message terminal may obtain the first information from the second mini app management platform by sending a rich media message. The following provides example descriptions with reference to FIG. 6.

FIG. 6 is a diagram of obtaining first information from a second mini app management platform according to this application. The following steps may be included.

Step 1: A rich media message terminal sends a first query request message to a rich media message center. The first query request message includes query information. Correspondingly, the rich media message center receives the first query request message from the rich media message terminal.

The query information includes a keyword used to describe information about a first rich media message mini app, or includes related information of the first rich media message mini app, or includes information about a requirement that the first rich media message mini app queried by the rich media message terminal needs to satisfy.

Optionally, the query information includes at least one of the following or a keyword included in at least one of the following: a name of the first rich media message mini app, a type of the first rich media message mini app, a name of a provider of the first rich media message mini app, a service content description or a function description of the first rich media message mini app, a language supported by a rich media message client, a version of a rich media message client, or the like.

Step 2: The rich media message center sends a second query request message to the second mini app management platform, where the second query request message includes the query information. Correspondingly, the second mini app management platform receives the second query request message from the rich media message center.

Step 3: The second mini app management platform locally obtains the information about the first rich media message mini app and/or the first rich media message mini app based on the query information.

Step 4: The second mini app management server sends a second query response message to the rich media message center, where the second query response message includes the information about the first rich media message mini app and/or the first rich media message mini app. Correspondingly, the rich media message center receives the second query response message from the mini app management server.

Step 5: The rich media message center sends a first query response message to the rich media message terminal, where the first query response message includes the information about the first rich media message mini app and/or the first rich media message mini app. Correspondingly, the rich media message terminal receives the first query response message from the rich media message center.

Step 6: The rich media message terminal displays the information about the first rich media message mini app and/or displays a related interface of the first rich media message mini app.

For example, the rich media message terminal displays the information about the first rich media message mini app to a user corresponding to the rich media message terminal in a form of a card or a text, so that the user interactively downloads and runs the mini app.

For example, the related interface of the first rich media message mini app includes an icon used to trigger running of the first rich media message mini app.

It may be understood that, in this implementation, the first query request message, the second query request message, the first query response message, and the second query response message are rich media messages.

In another implementation, the second mini app management platform may actively send a rich media message including the first information to the rich media message terminal, instead of sending the first information based on a query request of the rich media message terminal. A specific process is not described herein again.

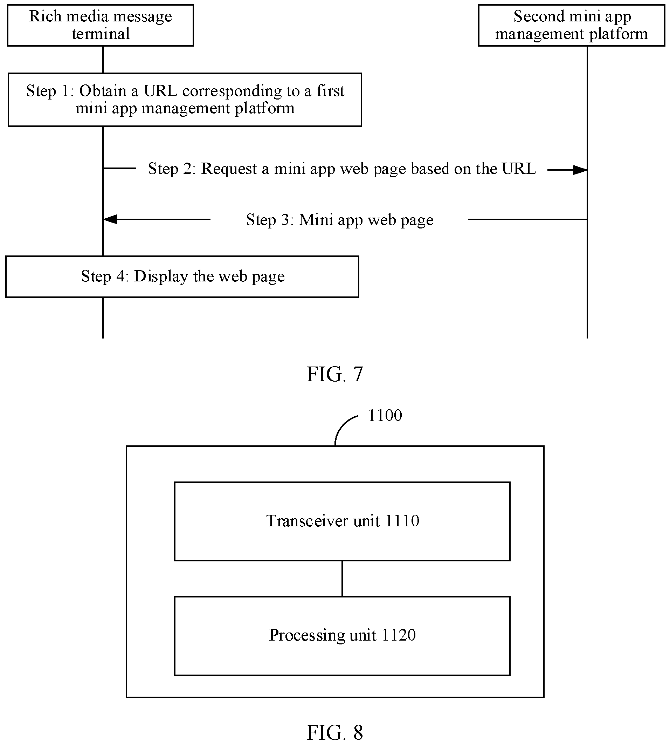

In still another implementation, the rich media message terminal may first obtain a uniform resource locator (uniform resource locator, URL) (namely, a link of a web page corresponding to the second mini app management platform) corresponding to the second mini app management platform, and then the rich media message terminal obtains the first information from the second mini app management platform based on the URL corresponding to the second mini app management platform. For example, the rich media message terminal may obtain, by using a built-in WebView or a built-in browser in the rich media message terminal, the first information based on the URL corresponding to the second mini app management platform. The following provides example descriptions with reference to FIG. 7.

FIG. 7 is a diagram of obtaining first information from a second mini app management platform according to this application. The following steps may be included.

Step 1: A rich media message terminal obtains a URL corresponding to the second mini app management platform.

For example, the rich media message terminal may obtain, in the following manner, the URL corresponding to the second mini app management platform.
(1) An operator can configure the URL to the rich media message terminal in advance via a SIM card.
(2) The rich media message terminal obtains the URL through a configuration server.

For example, the configuration server actively configures the URL to the rich media message terminal, for example, delivers a configuration to the rich media message terminal in an over the air (over the air, OTA) configuration mechanism such as open mobile alliance (open mobile alliance, OMA) device management. For specific implementation, refer to an OMA device management standard. Details are not described herein.

For example, the rich media message terminal may construct a default configuration server network domain name (for example, a fully qualified domain name (fully qualified domain name, FQDN)) based on mobile country code (mobile country code, MCC) and mobile network code (mobile network code, MNC) information in international mobile subscriber identity (international mobile subscriber identity, IMSI) code. For example, the constructed configuration server network domain name is config.rcs.mnc.mcc.pub.3gppnetwork.org. Then, the rich media message terminal sends a message, for example, an HTTP/HTTPS message, to the configuration server, to request configuration information. Correspondingly, the configuration server sends the configuration information to the rich media message terminal. The configuration information includes the URL.

(3) The operator can configure the URL to the rich media message terminal through a rich media message.

For example, the rich media message terminal receives the rich media message from a rich media message center, where the rich media message includes the URL.

Step 2: The rich media message terminal requests a mini app web page from the second mini app management platform based on the URL by using a built-in WebView or a built-in browser.

For example, the rich media message terminal requests the mini app web page from the second mini app management platform based on automatic trigger of the URL or under trigger of a user corresponding to the rich media message terminal.

Step 3: The built-in WebView or the built-in browser of the rich media message terminal receives the mini app web page returned by the second mini app management platform.

Optionally, the web page includes information about or a list of the first rich media message mini app, and/or a mini app query entry. The user corresponding to the rich media message terminal may obtain the information about the first rich media message mini app or the first rich media message mini app from the mini app management platform through the mini app query entry.

For example, if step 2 is triggered by the user, the user corresponding to the rich media message terminal may enter a keyword of the information about the first rich media message mini app, or enter related information of the first rich media message mini app, or enter information about a requirement that needs to be satisfied by the first rich media message mini app that is queried by the rich media message terminal in a query entry of the built-in WebView or the built-in browser, and trigger a request for the web page from the second mini app management platform. Correspondingly, the web page returned by the mini app management platform in step 3 may include the information about the first rich media message mini app and/or the first rich media message mini app. Optionally, the web page may further include the mini app query entry.

For example, if the rich media message terminal automatically triggers the request for the web page from the second mini app management platform in step 2, correspondingly, the web page returned by the mini app management platform in step 3 includes the mini app query entry.

Step 4: The rich media message terminal displays the web page to the user.

It may be understood that, a manner or a step of obtaining the information about the first rich media message mini app and/or the first rich media message mini app in FIG. 6 and FIG. 7 is merely an example description of a possible implementation of Manner 1. This is not limited in embodiments of this application.

Manner 2: The rich media message terminal obtains the first information from a first platform, where the first platform is a management platform other than the second mini app management platform. Specifically, the rich media message terminal receives a rich media message from the first platform, where the rich media message includes the first information. For example, the first platform may be a platform, for example, a bank or an insurance company that provides a service. The rich media message may be a rich media message sent by the first platform after the rich media message terminal sends, to the first platform, a query request related to the first rich media message mini app, or may be a rich media message actively sent by the first platform.

Manner 3: The rich media message terminal obtains the first information from another rich media message device. Specifically, the rich media message terminal receives a rich media message from the another rich media message device, where the rich media message includes the first information. For example, a user of a rich media message terminal A sends the first information to a rich media message device B through the rich media message terminal A.

It may be understood that, the rich media message device may be a device, other than the rich media message terminal, that can send the rich media message. This is not limited in this application. For example, the rich media message device may be a rich media message terminal other than the rich media message terminal, or may be a rich media message server.

It may be understood that, in addition to the first platform or the another rich media terminal, the rich media message terminal may alternatively receive the rich media message from another sender. The rich media message includes the first information. A sender of the rich media message is not limited in this application.

It may be further understood that, a manner in which the rich media message terminal obtains the first information in Manner 1 to Manner 3 is merely an example description. This is not limited in embodiments of this application.

S520: The rich media message terminal sends a first request message to a first mini app management platform, where the first request message includes a part or all of the first information, the first request message is used to request to perform verification on availability of the first rich media message mini app, and the first mini app management platform is a mini app management platform that is capable of providing a rich media message mini app availability verification function. Correspondingly, the first mini app management platform receives the first request message from the rich media message terminal, and S540 is performed.

It may be understood that, the first mini app management platform and the second mini app management platform are different mini app management platforms.

For example, the rich media message mini app availability verification function that can be provided by the first mini app management platform includes: verifying security of the first rich media message mini app, or verifying whether the rich media message terminal is allowed to run the first rich media message mini app. A function of verifying the rich media message mini app by the first mini app management platform is not specifically limited in this application. A scope or content of the function of verifying the rich media message mini app by the first mini app management platform may be added based on an actual requirement.

For example, that the first request message is used to request the first mini app management platform to perform verification on the availability of the first rich media message mini app includes: requesting the first mini app management platform to perform verification on the security of the first rich media message mini app, and/or requesting the first mini app management platform to verify whether the rich media message terminal is allowed to run the first rich media message mini app.

For example, the partial information or all the information, of the information of the first rich media message mini app, included in the first request message may be the keyword used to describe the information about the first rich media message mini app or the related information of the first rich media message mini app, or the information about the requirement that the queried first rich media message mini app needs to satisfy, or the first rich media message mini app.

For example, the first request message may be a rich media message, or may be an HTTP/HTTPS message. For example, information about the first mini app management platform (for example, an address of the first mini app management platform) may be configured via the SIM card to the rich media message terminal, or may be configured via the configuration server. For example, the configuration server may actively configure the information about the first mini app management platform to the rich media message terminal, for example, deliver the configuration to the rich media message terminal in the OTA configuration mechanism such as OMA device management. For specific implementation, refer to the OMA device management standard. For another example, the rich media message terminal may construct the default configuration server network domain name (for example, the fully qualified domain name (fully qualified domain name, FQDN)) based on the mobile country code (mobile country code, MCC) and the mobile network code (mobile network code, MNC) information in the international mobile subscriber identity (international mobile subscriber identity, IMSI) code. For example, the constructed configuration server network domain name is config.rcs.mnc.mcc.pub.3gppnetwork.org. Then, the rich media message terminal sends the message, for example, the HTTP/HTTPS message, to the configuration server, to request the configuration information. Correspondingly, the configuration server sends the configuration information to the rich media message terminal. The configuration information includes the information about the first mini app management platform.

Optionally, before S520, the method may further include the following steps.

S530: The rich media message terminal determines, based on the first information, to request the first mini app management platform to perform verification on the first rich media message mini app.

In other words, before S520, the rich media message terminal may determine, based on the first information, whether to request the first mini app management platform to perform verification on the first rich media message mini app. If verification needs to be performed, S520 is performed. If the rich media message terminal determines, based on the first information, that the first rich media message mini app can be run, the rich media message terminal directly runs the first rich media message mini app.

In a possible implementation, after the rich media message terminal receives the first information, the user of the rich media message terminal may select to tap an icon of the first rich media message mini app, and the rich media message terminal performs step S530 in response to the operation. In other words, if the user of the rich media message terminal does not tap the icon of the first rich media message mini app, the rich media message terminal does not initiate a verification procedure. In another possible implementation, after the rich media message terminal receives the first information, the rich media message terminal performs step S530 in response to the received first information.

In still another possible implementation, that the rich media message terminal determines, based on the first information, whether to request the first mini app management platform to perform verification on the availability of the first rich media message mini app means: The rich media message terminal determines, based on the first information and a local security strategy configuration, whether to request the first mini app management platform to perform verification on the availability of the first rich media message mini app. The security strategy may be about a verification-free level. For example, the verification-free level may be classified into a high level, a medium level, and a low level. For a same rich media message mini app, a lower verification level indicates that the rich media message mini app pass verification more easily, and a higher verification level indicates that the rich media message mini app pass verification more difficultly. For example, based on the local security strategy configuration, when a local verification-free level of the rich media message terminal is set to a low level (for example, only developer information is verified), even if the first rich media message mini app may have some other risks, provided that the rich media message terminal determines, based on the first information, that the first rich media message mini app satisfies a local verification-free level requirement (that is, local verification succeeds), the rich media message terminal considers that the first mini app management platform is not to be requested to perform further availability verification on the first rich media message mini app. In other words, for different rich media message terminals, because different local verification-free levels are set, for a same rich media message mini app, some rich media messages may determine to request the first mini app management platform to perform verification on availability of the rich media message mini app, and some rich media messages determine not to request the first mini app management platform to perform verification on the availability of the rich media message mini app. This implementation may also be combined with the foregoing two implementations. For example, after the rich media message terminal receives the first information, the user of the rich media message terminal may select to tap the icon of the first rich media message mini app, to trigger the rich media message terminal to locally perform verification on the first rich media message mini app. If the local verification fails, the rich media message terminal performs step S530. Alternatively, after the rich media message terminal receives the first information, in response to receiving the first information, the rich media message terminal locally performs verification on the first rich media message mini app. If the local verification fails, step S530 is performed.

For example, the rich media message terminal performs verification on the availability of the first rich media message mini app based on the first information and second information (namely, a security strategy configuration of the rich media message terminal), where the second information is used to determine to request the first mini app management platform to perform verification on the availability of the first rich media message mini app. For example, the second information may include security source information of the rich media message mini app and/or a public key used for verification on a signature of the rich media message mini app. The security source information includes information about a security service provider, a security link, and the like. Alternatively, the second information may include a verification strategy, where the verification strategy indicates whether the first mini app management platform needs to be requested to perform verification on the first rich media message mini app.

Optionally, provided that the information about the first rich media message mini app satisfies any verification condition in the second information, the rich media message terminal does not enable the first mini app management platform to perform verification on the availability of the first rich media message mini app.

For example, the rich media message terminal determines, based on the security source information in the second information, whether to enable the first mini app management platform to perform verification on the availability of the first rich media message mini app. Specifically, for example, when a sender identifier of the information about the first rich media message mini app is not included in the security source information, the rich media message terminal is to enable the first mini app management platform to perform verification on the availability of the first rich media message mini app. For example, the sender identifier may be a service number or a personal number of a platform such as a bank or an insurance company.

For another example, the rich media message terminal performs verification on the signature in the information about the first rich media message mini app by using the public key in the second information, and the rich media message terminal determines, based on a verification result, whether to enable the first mini app management platform to perform verification on the availability of the first rich media message mini app. Specifically, for example, the signature in the information about the first rich media message mini app includes signature information of the provider of the first rich media message mini app. The provider generates a ciphertext through encryption by using a private key, and the sender (for example, the second mini app management platform) sends the signature included in data to the rich media message terminal. The rich media message terminal decrypts the signature by using a public key corresponding to the private key, to perform verification on an identity of the sender and whether plaintext data is tampered with. In this case, if verification on the signature of the provider in the information about the first rich media mini app by using the public key used by the rich media message terminal fails, the rich media message terminal determines to request the first mini app management platform to perform verification on the availability of the first rich media message mini app.

Optionally, the second information may be configured via the SIM card to the rich media message terminal, or may be configured through the configuration server. For example, the configuration server may actively configure the second information to the rich media message terminal, for example, deliver the configuration to the rich media message terminal in the OTA configuration mechanism such as OMA device management. For specific implementation, refer to the OMA device management standard. For another example, the rich media message terminal may construct the default configuration server network domain name (for example, the fully qualified domain name (fully qualified domain name, FQDN)) based on the mobile country code (mobile country code, MCC) and the mobile network code (mobile network code, MNC) information in the international mobile subscriber identity (international mobile subscriber identity, IMSI) code. For example, the constructed configuration server network domain name is config.rcs.mnc.mcc.pub.3gppnetwork.org. Then, the rich media message terminal sends the message, for example, the HTTP/HTTPS message, to the configuration server, to request the configuration information. Correspondingly, the configuration server sends the configuration information to the rich media message terminal. The configuration information includes the second information.

For another example, the rich media message terminal determines, according to the verification strategy in the second information, whether to enable the first mini app management platform to perform verification on the availability of the first rich media message mini app. Specifically, for example, if the verification strategy indicates to request the first mini app management platform to perform verification on the first rich media message mini app, the rich media message terminal is to enable the first mini app management platform to perform verification on the availability of the first rich media message mini app.

It may be understood that, in S530, if the rich media message terminal determines that the first rich media message mini app can be directly run, the first rich media message mini app is run on the rich media message terminal. In addition, in S530, if the rich media message terminal determines that the first mini app management platform needs to further perform verification on the availability of the first rich media message mini app, S520 continues to be performed.

In this application, that the rich media message terminal runs the first rich media message mini app based on the first information may be understood as follows: If the first information does not include the first rich media message mini app, before the rich media message terminal runs the first rich media message mini app, the rich media message terminal needs to first download the first rich media message mini app based on a download address that is of the first rich media message mini app and that is in the first information; and then runs the first rich media message mini app. If the first information includes the first rich media message mini app, the rich media message terminal may directly run the first rich media message mini app. In a description of running the first rich media message mini app in this application, whether a download operation needs to be first performed may be determined based on specific information included in the first information. Details are not described below.

S540: The first mini app management platform performs verification on the first rich media message mini app based on the first request message, to obtain a verification result.

Optionally, the verification result in this application includes a first verification result, a second verification result, and a third verification result. The first verification result indicates that verification on the first rich media message mini app succeeds, the second verification result indicates that verification on the first rich media message mini app fails, the third verification result indicates that verification on the first rich media message mini app partially succeeds, and a fourth verification result is information that is about a rich media message mini app and that is stored on the first mini app management platform and/or the rich media message mini app (that is, implicitly indicating that verification on the first rich media message mini app succeeds) that are/is obtained by the first mini app management platform through query based on the first request message. For example, an example in which the first mini app management platform performs, one by one, verification on the information that is about the first rich media message mini app and that is included in the first information is used for description. If verification on all the information about the first rich media message mini app succeeds, the verification result is the first verification result. If verification on any piece of information in the information about the first rich media message mini app fails, the verification result is the second verification result. If verification on a part of information about the first rich media message mini app succeeds, and verification on the other part of information about the first rich media message mini app fails, the verification result is the third verification result. For example, if verification on a provider or developer identity in the information about the first rich media message mini app succeeds, but whether other information in the information about the first rich media message mini app is secure cannot be verified, the verification result is the third verification result.

Specifically, if the first request message requests to perform verification on the security of the first rich media message mini app, the first verification result indicates that the first rich media message mini app is a secure mini app, the second verification result indicates that the first rich media message mini app is an insecure mini app, and the third verification result indicates that the first rich media message mini app is a partially secure mini app. If the first request message requests to verify whether the rich media message terminal is allowed to run the first rich media message mini app, the first verification result indicates that the rich media message terminal is allowed to run the first rich media message mini app, and the second verification result indicates that the rich media message terminal is not allowed to run the first rich media message mini app.

Optionally, that the first mini app management platform performs verification on the availability of the first rich media message mini app based on the first request message includes any one of the following implementations.

In an implementation, the first request message may request to perform verification on the security of the first rich media message mini app, and the first mini app management platform performs verification by querying, based on the first request message, whether the information about the first rich media message mini app is stored locally, and generates a verification result of the first rich media message mini app based on a query result. This implementation may be understood as follows: The rich media message terminal queries the first mini app management platform for the related information of the first rich media message mini app based on the first request message, and the first mini app management platform determines, based on the query result, whether verification on the first rich media message mini app succeeds.

For example, in this implementation, if the rich media message terminal is capable of finding, based on the first request message, the information that is about the rich media message mini app and that is stored locally on the first mini app management platform, the verification result is the fourth verification result. The fourth verification result is the locally stored information about the rich media message mini app and/or the rich media message mini app that are/is found by the rich media message terminal based on the first request message. Alternatively, comparison for verification is performed on the information that is about the first rich media message and that is included in the first request message and the information that is about the rich media message mini app, that is stored locally on the platform, and that is found by the rich media message terminal based on the first request message. If comparison results are consistent, it indicates that verification on the first rich media message mini app succeeds, that is, the verification result is the first verification result. If the information about the first rich media message mini app is not found locally, it indicates that verification on the first rich media message mini app fails, that is, the verification result is the second verification result.

In another implementation, the second mini app management platform directly performs verification on the availability of the first rich media message mini app on a local platform based on the first request message. For example, in this implementation, the first mini app management platform may specifically perform verification in the following manner.

Manner 1: The first request message may request to verify whether the first rich media message mini app is allowed to run. In this case, the first mini app management platform locally obtains third information based on the first request message. The third information includes subscription information and/or configuration information corresponding to the rich media message terminal, and the first mini app management platform determines the verification result of the first rich media message mini app based on the first request message and the third information.

The subscription information corresponding to the rich media message terminal is an agreement signed between a user of the rich media message terminal and a rich media message service provider (for example, an operator) for providing and using a service. The subscription information may include whether the user of the rich media message terminal uses, for a fee or free of charge, a rich media message mini app service provided by the operator, or a provider that provides a rich media message mini app that can be used by the user of the rich media terminal. The configuration information may be information configured by the operator unilaterally in a rich media message system. For example, a user, of a type, of the rich media message terminal is allowed to use the rich media message mini app service in some areas or a time period, or the rich media message terminal can run only a rich media message mini app provided by the operator, or the rich media message terminal can run only a rich media message mini app obtained from an operator platform.

An example in which the configuration information in the third information includes a case in which only the rich media message mini app obtained from the operator platform can be run on the rich media message terminal is used for description. If the first mini app management platform determines, based on the first request message, that a source of the first rich media message mini app is the operator platform, the verification result obtained by the rich media message terminal is the first verification result. If the first mini app management platform determines, based on the first request message, that the source of the first rich media message mini app is not the operator platform, the verification result obtained by the rich media message terminal is the second verification result.

Manner 2: The first request message may request to perform verification on the security of the first rich media message mini app. In this case, the first mini app management platform may locally obtain information about a corresponding rich media message mini app (referred to as information about the second rich media message mini app) based on the partial information or all the information of the first information included in the first request message. The first mini app management platform directly uses the obtained information about the second rich media message mini app as the fourth verification result, or the first mini app management platform locally compares the information about the first rich media message mini app with the information about the second rich media message mini app, and determines the verification result of the first rich media message mini app based on comparison results. For example, if the comparison results are the same, the first mini app management platform determines that the verification result is the first verification result. If the comparison results are different, the first mini app management platform determines that the verification result is the second verification result. If some of comparison results are the same and some of comparison results are different, the first mini app management platform determines that the verification result is the third verification result.

Manner 3: The first request message may request to perform verification on the security of the first rich media message mini app. The first mini app management platform obtains the first rich media message mini app based on the first information, locally performs security scanning on the first rich media message mini app, and determines the verification result of the first rich media message mini app based on a scanning result.

It may be understood that, if the first information includes the information about the first rich media message mini app, and the information about the first rich media message mini app includes the download address of the first rich media message mini app, the first mini app management platform downloads the first rich media message mini app locally based on the download address. If the first information includes the first rich media message mini app, the first mini app management platform obtains the first rich media message mini app from a storage unit that stores the first information.

For example, if the scanning result of the first rich media message mini app is normal, the first mini app management platform determines that the verification result is the first verification result. If the scanning result of the first rich media message mini app is abnormal, the first mini app management platform determines that the verification result is the second verification result or the third verification result.

Optionally, the first mini app management platform may locally store the verification result of the first rich media message mini app, so that when another rich media message terminal subsequently requests the first mini app management platform to perform verification on the first rich media message mini app, the first mini app management platform may directly return the verification result based on the locally stored information.

S550: The first mini app management platform sends a first response message to the rich media message terminal, where the first response message includes a result of verification performed by the first mini app management platform on the first rich media message mini app. Correspondingly, the rich media message terminal receives the first response message from the first mini app management platform.

S560: The rich media message terminal performs a corresponding operation on the first rich media message mini app based on the verification result.

For example, if the verification result of the first rich media message mini app is the first verification result or the fourth verification result, the rich media message terminal may run a corresponding rich media message mini app. Specifically, when the verification result is the first verification result, the rich media message terminal runs the first rich media message mini app. When the verification result is the fourth verification result, the rich media message terminal runs the rich media message mini app included in the fourth verification result or the rich media message mini app obtained based on the information that is about the rich media message mini app and that is in the fourth verification result.

Optionally, if the verification result of the first rich media message mini app is the first verification result, when running the first rich media message mini app, the rich media message terminal may further provide user information for the first rich media message mini app. The user information is information related to a user corresponding to the rich media message terminal, and indicates the user of the first rich media message mini app. A server corresponding to the first rich media message mini app provides a service for the user based on the user information.

Specifically, a function of providing the user information for the first rich media message mini app is as follows: Based on security of the rich media message and trust in the operator, the first rich media message mini app considers by default that the user information provided by the rich media message terminal is secure, and the user information may be provided for a service device corresponding to the first rich media message mini app. After the rich media message mini app server (namely, the service end device corresponding to the first rich media message mini app) receives the user information, the rich media message mini app server may skip verifying the user of the first rich media message mini app based on the user information, for example, does not need to initiate a verification procedure on the user of the first rich media message mini app. In this way, the user does not need to perform a verification process of entering an account/a password, and may directly use the rich media message mini app service (for example, bank card balance query). For example, the user information includes a user identifier and a signature of the first mini app management platform on the user identifier. After verification on the signature succeeds, the rich media message mini app server determines to exempt verifying the user of the first rich media message mini app. For example, the user information may further include a token (token) provided by the first platform. After verification on the token by the first mini app management platform or a corresponding verification center succeeds, the server determines to exempt verifying the user of the first rich media message mini app. In other words, that the rich media message terminal provides the user information for the first rich media message mini app means that the rich media message terminal provides security credential information for the first rich media message mini app.

For example, the user identifier included in the user information may be a unique identifier allocated by a network operator in a wireless communication system to a SIM card used by the user. For example, the unique identifier is an international mobile subscriber identity (International Mobile Subscriber Identity, IMSI) or a subscription permanent identifier (Subscription Permanent Identifier, SUPI). Alternatively, the user information may be a generic public subscription identifier (Generic Public Subscription Identifier, GPSI).

Optionally, if the verification result of the first rich media message mini app is the fourth verification result, when running the rich media message mini app included in the fourth verification result or the rich media message mini app obtained based on the information that is about the rich media message mini app and that is in the fourth verification result, the rich media message terminal may also provide the user information for the second rich media message mini app. The user information is the information related to the user corresponding to the rich media message terminal, and indicates a user of the rich media message mini app related to the fourth verification result. It may be understood that, based on the security of the rich media message and the trust in the operator, the second rich media message mini app considers by default that the user information provided by the rich media message terminal is secure, and may provide the user information for a server corresponding to the rich media message mini app related to the fourth verification result. The server corresponding to the second rich media message mini app provides a service for the user based on the user information. A function is the same as that of providing the user information for the first rich media message mini app by the rich media message terminal. Details are not described herein again.

How the rich media message terminal provides user information corresponding to the rich media message terminal for the first rich media message mini app is described by using an example. For example, when the mini app is enabled, the rich media message terminal may carry the user information corresponding to the rich media message terminal (for example, transfer the user identifier or another verification parameter in a mini app entry function). Alternatively, when the mini app is enabled, the rich media message terminal registers a callback function in the rich media message mini app, and subsequently, the rich media message mini app obtains, by using the callback function, the user information corresponding to the rich media message terminal from the rich media message terminal. The rich media message mini app provides the secure user information for a mini app service side. When the mini app service side provides a service for a user of the rich media message terminal, a verification operation on the user of the rich media message terminal does not need to be performed again (that is, the user is exempted from verification).

For example, if the verification result of the first rich media message mini app is the second verification result or the third verification result, the rich media message terminal displays the first rich media message mini app and the verification result, to provide a verification result prompt (for example, a security prompt) for the user corresponding to the rich media message terminal. After confirming the verification result prompt, the user determines, based on a result of interaction with the user, whether to run the first rich media message mini app. Alternatively, if the verification result of the first rich media message mini app is the second verification result or the third verification result, the rich media message terminal determines, based on a locally preset security setting (for example, the user presets a case in which the rich media message terminal is allowed to download or run a rich media message mini app whose verification result is the second verification result or the third verification result), whether to run the first rich media message mini app. For example, if the verification result of the first rich media message mini app is the second verification result, the rich media message terminal displays the first rich media message mini app and the verification result, and does not run the first rich media message mini app after the user confirms the verification result prompt, or runs the first rich media message mini app but does not upload the user information of the rich media message terminal to the first rich media message mini app (that is, verification exemption is disabled).

The foregoing describes in detail, with reference to FIG. 5, a specific procedure in which the rich media message terminal performs verification on the availability of the rich media message mini app. The method may be implemented by using the architecture shown in FIG. 4. Based on the foregoing embodiment, the rich media message terminal may obtain the information about the first rich media message mini app, determine whether to request the second mini app management platform to perform verification on the availability of the first rich media message mini app, interact with the rich media message mini app management platform to perform verification on the availability of the first rich media message mini app, run the first rich media message mini app based on the verification result, and transfer the user information to the first rich media message mini app based on the verification result. In this way, the rich media message terminal can download and run the mini app while ensuring that the first rich media message mini app can be run, to avoid a risk and a loss caused to the user by enabling a mini app with unknown security. In addition, the user information may be further provided based on the security verification result, so that the user can use the service of the first rich media message mini app without verification. This facilitates the user to use the first rich media message mini app while ensuring that the first rich media message mini app can be run.

It may be understood that the foregoing steps in FIG. 5 are merely examples for description, and these are not strictly limited. In addition, sequence numbers of the foregoing processes do not mean a sequence of execution. The sequence of execution of the processes should be determined based on functions and internal logic of the processes, and should not constitute any limitation on an implementation process of this embodiment of this application.

It may be further understood that some message names in embodiments of this application do not limit the protection scope of embodiments of this application.

It may be further understood that, some optional features in embodiments of this application may not depend on another feature in some scenarios, or may be combined with another feature in some scenarios. This is not limited.

It may be further understood that, in the foregoing method embodiments, the method and the operation implemented by the device may alternatively be implemented by a component (such as a chip or a circuit) of the device. This is not limited.

Corresponding to the methods provided in the foregoing method embodiments, embodiments of this application further provide a corresponding apparatus. The apparatus includes corresponding modules configured to perform the foregoing method embodiments. The module may be software, hardware, or a combination of software and hardware. It may be understood that the technical features described in the method embodiments are also applicable to the following apparatus embodiments.

FIG. 8 is a diagram of a communication apparatus 1100 according to an embodiment of this application. The apparatus 1100 includes a transceiver unit 1110 and a processing unit 1120. The transceiver unit 1110 may be configured to implement a corresponding communication function. The transceiver unit 1110 may also be referred to as a communication interface or a communication unit. The processing unit 1120 may be configured to perform a processing operation, for example, generate a query message and run a rich media message mini app.

Optionally, the apparatus 1100 further includes a storage unit. The storage unit may be configured to store instructions and/or data. The processing unit 1120 may read the instructions and/or the data in the storage unit, so that the apparatus implements an action of the core network device or the user equipment in the foregoing method embodiments.

In a first design, the apparatus 1100 may be the rich media message terminal (for example, the rich media message terminal in FIG. 5, FIG. 6, and FIG. 7) in the foregoing embodiments, or may be a component (for example, a chip) of the rich media message terminal. The apparatus 1100 may implement steps or procedures that are correspondingly performed by the rich media message terminal in the foregoing method embodiments. The transceiver unit 1110 may be configured to perform an operation (for example, an operation of sending and/or receiving data or a message) related to sending and receiving of the rich media message terminal in the foregoing method embodiments. For example, the transceiver unit 1110 may be configured to perform the operation of sending the first request message to the first mini app management platform in S520 and the operation of receiving the first response message from the first mini app management platform in S550 in FIG. 5, may be further configured to perform the operation of sending the first query request message to the rich media message center in step 1 and the operation of receiving the first query response message from the rich media message center in step 5 in FIG. 6, and may be further configured to perform the operation of sending and/or receiving data or a message by the rich media message terminal in FIG. 7. The processing unit 1120 may be configured to perform an operation related to data and/or information processing of the rich media message terminal in the foregoing method embodiments, or an operation other than sending and receiving (for example, an operation other than sending and/or receiving data or a message). For example, the processing unit 1120 may be configured to perform the operations in S530 and S560 in FIG. 5, may be further configured to perform the operation in step 6 in FIG. 6, and may be further configured to perform the operation in step 4 in FIG. 7.

In a possible implementation, the transceiver unit 1100 is configured to obtain first information, where the first information includes information about a first rich media message mini app and/or the first rich media message mini app; the transceiver unit 1100 is further configured to send a first request message to a first mini app management platform, where the first request message includes a part or all of the first information, the first request message is used to request the first mini app management platform to perform verification on the first rich media message mini app, and the first mini app management platform is a management platform that is capable of providing a rich media message mini app verification function; the transceiver unit 1100 is further configured to receive a first response message from the first mini app management platform, where the first response message includes a result of verification performed by the first mini app management platform on the first rich media message mini app; and the processing unit 1120 is configured to perform, by a rich media message terminal, a corresponding operation on the first rich media message mini app based on the verification result.

Optionally, the processing unit 1120 is further configured to determine, based on the first information, to request the first mini app management platform to perform verification on the first rich media message mini app.

For example, the first request message is used to request the first mini app management platform to perform verification on security of the first rich media message mini app, or the first request message is used to request the first mini app management platform to verify whether the rich media message terminal is allowed to run the first rich media message mini app.

Optionally, the transceiver unit 1100 is further configured to obtain second information, where the second information includes security source information of the rich media message mini app and/or a public key used for verification on a signature of the first rich media message mini app, or the second information includes a verification strategy, and the verification strategy indicates to request the first mini app management platform to perform verification on the first rich media message mini app; and the processing unit 1120 is further configured to determine, based on the first information and the second information, to request the first mini app management platform to perform verification on the first rich media message mini app.

Optionally, when a sender identifier of the first information is not included in the security source information, the processing unit 1120 is further configured to determine to request the first mini app management platform to perform verification on the first rich media message mini app; or when verification on the signature in the information about the first rich media message mini app by using the public key fails, the processing unit 1120 is further configured to determine to request the first mini app management platform to perform verification on the first rich media message mini app; or when the verification strategy indicates to request the first mini app management platform to perform verification on the first rich media message mini app, the processing unit 1120 is further configured to determine to request the first mini app management platform to perform verification on the first rich media message mini app.

For example, the information about the first rich media message mini app includes at least one of the following: a download address of the first rich media message mini app, an identifier of the first rich media message mini app, a name of the first rich media message mini app, an address of an icon of the first rich media message mini app, a version of the first rich media message mini app, developer information of the first rich media message mini app, provider information of the first rich media message mini app, signature information of a developer of the first rich media message mini app, and signature information of a provider of the first rich media message mini app.

Optionally, the transceiver unit 1100 is further configured to obtain the first information from a second mini app management platform, or the rich media message terminal obtains the first information from a management platform other than a second mini app management platform, or the rich media message terminal obtains the first information from a rich media message device other than the rich media message terminal.

Optionally, the transceiver unit 1100 is further configured to obtain a uniform resource locator URL corresponding to the second mini app management platform; and the transceiver unit 1100 is further configured to obtain a web page corresponding to the URL, where the web page includes the first information and/or a mini app query entry, and the mini app query entry is used to obtain the first information.

Optionally, the transceiver unit 1100 is further configured to receive a first rich media message, where the first rich media message includes the first information.

For example, the verification result includes one of the following: a first verification result, a second verification result, a third verification result, and a fourth verification result, where the first verification result indicates that verification on the first rich media message mini app succeeds, the second verification result indicates that verification on the first rich media message mini app fails, the third verification result indicates that verification on the first rich media message mini app partially succeeds, and the fourth verification result is locally stored information about a rich media message mini app and/or the rich media message mini app that are/is obtained by the first mini app management platform through query based on the first request message.

Optionally, the verification result is the first verification result or the fourth verification result, and the processing unit 1120 is configured to determine, based on a user indication or a local security setting, to run the first rich media message mini app; or the processing unit 1120 is configured to determine, based on a user indication or a local security setting, to refuse to run the first rich media message mini app.

Optionally, the verification result is the first verification result or the fourth verification result, and the transceiver unit 1110 is further configured to provide user information for the first rich media message mini app, where the user information is information related to a user corresponding to the rich media message terminal, and indicates the user of the first rich media message mini app.

In a second design, the apparatus 1100 may be the first mini app management platform in the foregoing embodiments, or may be a component (for example, a chip) of the first mini app management platform. The apparatus 1100 may implement steps or procedures that are correspondingly performed by the first mini app management platform in the foregoing method embodiments. The transceiver unit 1110 may be configured to perform an operation related to sending and receiving of the first mini app management platform (for example, an operation of sending and/or receiving data or a message) in the foregoing method embodiments. For example, the transceiver unit 1110 may be configured to perform the operation of receiving the first request message from the rich media message terminal in S520 and the operation of sending the first response message to the rich media message terminal in S550 in FIG. 5. The processing unit 1120 may be configured to perform a processing-related operation of the first mini app management platform in the foregoing method embodiments, or an operation other than sending and receiving (for example, an operation other than sending and/or receiving data or a message). For example, the processing unit 1120 may be configured to perform an operation in step 540 in FIG. 5.

In a possible implementation, the transceiver unit 1110 is configured to receive a first request message from a rich media message terminal, where the first request message includes a part or all of first information, the first information includes information about a first rich media message mini app and/or the first rich media message mini app, the first request message is used to request the first mini app management platform to perform verification on the first rich media message mini app, and the first mini app management platform is a mini app management platform that is capable of providing rich media message mini app verification; the processing unit 1120 is configured to perform verification on the first rich media message mini app based on the first request message, to obtain a verification result; and the transceiver unit 1110 is further configured to send a first response message to the rich media message terminal, where the first response message includes the verification result.

For example, the first request message is used to request the first mini app management platform to perform verification on security of the first rich media message mini app, or the first request message is used to request the first mini app management platform to verify whether the rich media message terminal is allowed to run the first rich media message mini app.

For example, the information about the first rich media message mini app includes at least one of the following: a download address of the first rich media message mini app, an identifier of the first rich media message mini app, a name of the first rich media message mini app, a version of the first rich media message mini app, developer information of the first rich media message mini app, provider information of the first rich media message mini app, signature information of a developer of the first rich media message mini app, and signature information of a provider of the first rich media message mini app.

Optionally, the processing unit 1120 is further configured to query, based on the first request message, information that is about a rich media message mini app and that is stored locally on the first mini app management platform; and the processing unit 1120 is further configured to obtain the verification result based on a query result.

For example, if the first mini app management platform is capable of finding, based on the first request message, information that is about the rich media message mini app and that is stored locally on the first mini app management platform, the verification result includes a fourth verification result. The fourth verification result is the locally stored information about the rich media message mini app and/or the rich media message mini app. Alternatively, if the first mini app management platform can find, based on the first request message, the information that is about the rich media message mini app and that is stored locally on the first mini app management platform, the locally stored information about the rich media message mini app is compared with the first request message to obtain the verification result. The verification result includes a first verification result, a second verification result, or a third verification result, where the first verification result indicates that verification on the first rich media message mini app succeeds, the second verification result indicates that verification on the first rich media message mini app fails, and the third verification result indicates that verification on the first rich media message mini app partially succeeds.

Optionally, the transceiver unit 1110 is further configured to obtain third information, where the third information includes subscription information and/or configuration information corresponding to the rich media message terminal; and the processing unit 1120 is further configured to obtain the verification result based on the first request message and the third information.

Optionally, the transceiver unit 1110 is further configured to obtain the first rich media message mini app based on the first request message; the processing unit 1120 is further configured to perform security scanning on the obtained first rich media message mini app; and the processing unit 1120 is further configured to obtain the verification result based on a scanning result.

For example, the verification result includes a first verification result, a second verification result, or a third verification result, where the first verification result indicates that verification on the first rich media message mini app succeeds, the second verification result indicates that verification on the first rich media message mini app fails, and the third verification result indicates that verification on the first rich media message mini app partially succeeds.

It may be understood that a specific process in which the units perform the foregoing corresponding steps is described in detail in the foregoing method embodiments. For brevity, details are not described herein again.

It may be further understood that, the apparatus 1100 is embodied in a form of a functional unit. The term "unit" herein may refer to an application-specific integrated circuit (application-specific integrated circuit, ASIC), an electronic circuit, a processor (for example, a shared processor, a dedicated processor, or a group processor) and a memory that are configured to execute one or more software or firmware programs, a combined logic circuit, and/or another suitable component that supports the described functions. In an optional example, a person skilled in the art may understand that the apparatus 1100 may be specifically the rich media message terminal (for example, the rich media message terminal in FIG. 5, FIG. 6, and FIG. 7) in the foregoing embodiments, and may be configured to perform procedures and/or steps corresponding to the rich media message terminal in the foregoing method embodiments, for example, S510 to S530, S550, and S560 in FIG. 5, step 1, step 5, and step 6 in FIG. 6, and step 1 to step 4 in FIG. 7. Alternatively, the apparatus 1100 may be specifically the second mini app management platform in the foregoing embodiments, and may be configured to perform procedures and/or steps corresponding to the second mini app management platform in the foregoing method embodiments, for example, S530 to S550 in FIG. 5. To avoid repetition, details are not described herein again.

The apparatus 1100 in the foregoing solutions has a function of implementing corresponding steps performed by the rich media message terminal (for example, the rich media message terminal in FIG. 5, FIG. 6, and FIG. 7) in the foregoing methods, or the apparatus 1100 in the foregoing solutions has a function of implementing corresponding steps performed by the second mini app management platform in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform a sending and receiving operation and a related processing operation in the method embodiments.

In addition, the transceiver unit 1110 may alternatively be a transceiver circuit (for example, may include a receiver circuit and a transmitter circuit), and the processing unit may be a processing circuit.

It should be noted that the apparatus in FIG. 8 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

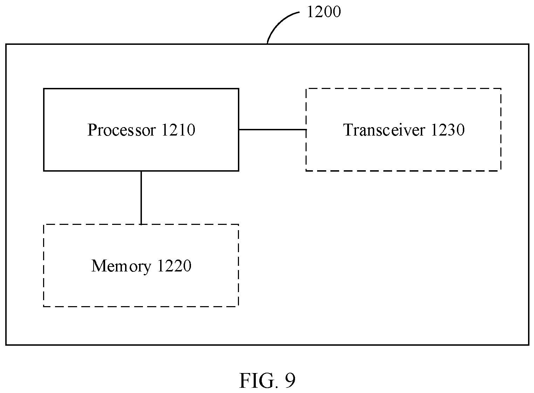

FIG. 9 is a diagram of another communication apparatus 1200 according to an embodiment of this application. The apparatus 1200 includes a processor 1210. The processor 1210 is configured to execute a computer program or instructions stored in a memory 1220, or read data stored in the memory 1220, to perform the methods in the foregoing method embodiments. Optionally, there are one or more processors 1210.

Optionally, as shown in FIG. 9, the apparatus 1200 further includes the memory 1220, and the memory 1220 is configured to store the computer program or the instructions and/or the data. The memory 1220 and the processor 1210 may be integrated, or may be disposed separately. Optionally, there are one or more memories 1220.

Optionally, as shown in FIG. 9, the apparatus 1200 further includes a transceiver 1230. The transceiver 1230 is configured to receive and/or send a signal. For example, the processor 1210 is configured to control the transceiver 1230 to receive and/or send the signal.

In a solution, the apparatus 1200 is configured to implement operations performed by the rich media message terminal (for example, the rich media message terminal in FIG. 5, FIG. 6, and FIG. 7) in the foregoing method embodiments.

In another solution, the apparatus 1200 is configured to implement operations performed by the first mini app management platform in the foregoing method embodiments.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory and/or a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It may be understood that, when the processor is a general-purpose processor, a DSP, an ASIC, an FPGA or another programmable logic device, a discrete gate or a transistor logic device, or a discrete hardware component, the memory (storage module) may be integrated into the processor.

It may be further understood that, the memory described in this specification aims to include but is not limited to these memories and any memory of another proper type.

Embodiments of this application further provide a computer-readable storage medium, where the computer-readable storage medium stores computer instructions used to implement the method performed by the rich media message terminal (for example, the rich media message terminal in FIG. 5, FIG. 6, and FIG. 7) in the foregoing method embodiments.

Embodiments of this application further provide a computer-readable storage medium, where the computer-readable storage medium stores computer instructions used to implement the method performed by the first mini app management platform in the foregoing method embodiments.

Embodiments of this application further provide a computer program product, including instructions. When the instructions are executed by a computer, the method performed by the rich media message terminal (for example, the rich media message terminal in FIG. 5, FIG. 6, and FIG. 7) in the foregoing method embodiments is implemented.

Embodiments of this application further provide a computer program product, including instructions. When the instructions are executed by a computer, the method performed by the first mini app management platform in the foregoing method embodiments is implemented.

Embodiments of this application further provide a communication system, including at least one of the foregoing rich media message terminal (for example, the rich media message terminal in FIG. 5, FIG. 6, and FIG. 7), the first mini app management platform, and the second mini app management platform.

For explanations and beneficial effect of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or in another form.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a rich media message terminal, first information, wherein the first information comprises information about a first rich media message mini app and/or the first rich media message mini app;
sending, by the rich media message terminal, a first request message to a first mini app management platform, wherein the first request message comprises a part or all of the first information, the first request message is used to request the first mini app management platform to perform verification on the first rich media message mini app, and the first mini app management platform is a management platform that is capable of providing a rich media message mini app verification function;
receiving, by the rich media message terminal, a first response message from the first mini app management platform, wherein the first response message comprises a result of verification performed by the first mini app management platform on the first rich media message mini app; and
performing, by the rich media message terminal, a corresponding operation on the first rich media message mini app based on the verification result.

2. The method according to claim 1, wherein the first request message is used to request the first mini app management platform to perform verification on security of the first rich media message mini app, or the first request message is used to request the first mini app management platform to verify whether the rich media message terminal is allowed to run the first rich media message mini app.

3. The method according to claim 1 or 2, wherein the method further comprises:
determining, by the rich media message terminal based on the first information, to request the first mini app management platform to perform verification on the first rich media message mini app.

4. The method according to claim 3, wherein the determining, by the rich media message terminal based on the first information, to request the first mini app management platform to perform verification on the first rich media message mini app comprises:
obtaining, by the rich media message terminal, second information, wherein the second information comprises security source information of the rich media message mini app and/or a public key used for verification on a signature of the first rich media message mini app, or the second information comprises a verification strategy, and the verification strategy indicates that the first mini app management platform needs to be requested to perform verification on the first rich media message mini app; and
determining, by the rich media message terminal based on the first information and the second information, to request the first mini app management platform to perform verification on the first rich media message mini app.

5. The method according to claim 4, wherein the determining, by the rich media message terminal based on the first information and the second information, to request the first mini app management platform to perform verification on the first rich media message mini app comprises:
when a sender identifier of the first information is not comprised in the security source information, determining, by the rich media message terminal, to request the first mini app management platform to perform verification on the first rich media message mini app; or
when verification on the signature in the information about the first rich media message mini app by using the public key fails, determining, by the rich media message terminal, to request the first mini app management platform to perform verification on the first rich media message mini app; or
when the verification strategy indicates to request the first mini app management platform to perform verification on the first rich media message mini app, determining, by the rich media message terminal, to request the first mini app management platform to perform verification on the first rich media message mini app.

6. The method according to any one of claims 1 to 5, wherein the information about the first rich media message mini app comprises at least one of the following:
a download address of the first rich media message mini app, an identifier of the first rich media message mini app, a name of the first rich media message mini app, an address of an icon of the first rich media message mini app, a version of the first rich media message mini app, developer information of the first rich media message mini app, provider information of the first rich media message mini app, signature information of a developer of the first rich media message mini app, and signature information of a provider of the first rich media message mini app.

7. The method according to any one of claims 1 to 6, wherein the obtaining, by a rich media message terminal, first information comprises:
obtaining, by the rich media terminal, the first information from a second mini app management platform; or
obtaining, by the rich media terminal, the first information from a management platform other than a second mini app management platform; or
obtaining, by the rich media message terminal, the first information from a rich media message device other than the rich media message terminal.

8. The method according to claim 7, wherein the obtaining, by the rich media message terminal, the first information from a second mini app management platform comprises:
obtaining, by the rich media message terminal, a uniform resource locator URL corresponding to the second mini app management platform; and
obtaining, by the rich media message terminal, a web page corresponding to the URL, wherein the web page comprises the first information and/or a mini app query entry, and the mini app query entry is used to obtain the first information.

9. The method according to any one of claims 1 to 7, wherein the obtaining, by a rich media message terminal, first information comprises:
receiving, by the rich media message terminal, a first rich media message, wherein the first rich media message comprises the first information.

10. The method according to any one of claims 1 to 9, wherein the verification result comprises one of the following:
a first verification result, a second verification result, a third verification result, and a fourth verification result, wherein the first verification result indicates that verification on the first rich media message mini app succeeds, the second verification result indicates that verification on the first rich media message mini app fails, the third verification result indicates that verification on the first rich media message mini app partially succeeds, and the fourth verification result is locally stored information about a rich media message mini app and/or the rich media message mini app that are/is obtained by the first mini app management platform through query based on the first request message.

11. The method according to claim 10, wherein
the verification result is the first verification result or the fourth verification result, and the performing, by the rich media message terminal, a corresponding operation on the first rich media message mini app based on the verification result comprises: running, by the rich media message terminal, the first rich media message mini app based on the verification result;
or
the verification result is the second verification result or the third verification result, and the performing, by the rich media message terminal, a corresponding operation on the first rich media message mini app based on the verification result comprises: determining, by the rich media message terminal based on a user indication or a local security setting, to run the first rich media message mini app; or determining, by the rich media message terminal based on a user indication or a local security setting, to refuse to run the first rich media message mini app.

12. The method according to claim 10 or 11, wherein the verification result is the first verification result or the fourth verification result, and the performing, by the rich media message terminal, a corresponding operation on the first rich media message mini app based on the verification result comprises:
providing, by the rich media message terminal, user information for the first rich media message mini app, wherein the user information is information related to a user corresponding to the rich media message terminal, and indicates the user of the first rich media message mini app.

13. A communication method, comprising:
receiving, by a first mini app management platform, a first request message from a rich media message terminal, wherein the first request message comprises a part or all of first information, the first information comprises information about a first rich media message mini app and/or the first rich media message mini app, the first request message is used to request the first mini app management platform to perform verification on the first rich media message mini app, and the first mini app management platform is a management platform that is capable of providing a rich media message mini app verification function;
performing, by the first mini app management platform, verification on the first rich media message mini app based on the first request message, to obtain a verification result; and
sending, by the first mini app management platform, a first response message to the rich media message terminal, wherein the first response message comprises the verification result.

14. The method according to claim 13, wherein the first request message is used to request the first mini app management platform to perform verification on security of the first rich media message mini app, or the first request message is used to request the first mini app management platform to verify whether the rich media message terminal is allowed to run the first rich media message mini app.

15. The method according to claim 13 or 14, wherein the information about the first rich media message mini app comprises at least one of the following:
a download address of the first rich media message mini app, an identifier of the first rich media message mini app, a name of the first rich media message mini app, a version of the first rich media message mini app, developer information of the first rich media message mini app, provider information of the first rich media message mini app, signature information of a developer of the first rich media message mini app, and signature information of a provider of the first rich media message mini app.

16. The method according to any one of claims 13 to 15, wherein the performing, by the first mini app management platform, verification on the first rich media message mini app based on the first request message, to obtain a verification result comprises:
querying, by the first mini app management platform based on the first request message, information that is about a rich media message mini app and that is stored locally on the first mini app management platform; and
determining, by the first mini app management platform, the verification result based on a query result.

17. The method according to claim 16, wherein
if the first mini app management platform is capable of finding, based on the first request message, the information that is about the rich media message mini app and that is stored locally on the first mini app management platform, the verification result comprises a fourth verification result, and the fourth verification result is the locally stored information about the rich media message mini app and/or the rich media message mini app;
or
if the first mini app management platform is capable of finding, based on the first request message, the information that is about the rich media message mini app and that is stored locally on the first mini app management platform, the locally stored information about the rich media message mini app is compared with the first request message to obtain the verification result, and the verification result comprises a first verification result, a second verification result, or a third verification result, wherein the first verification result indicates that verification on the first rich media message mini app succeeds, the second verification result indicates that verification on the first rich media message mini app fails, and the third verification result indicates that verification on the first rich media message mini app partially succeeds.

18. The method according to any one of claims 13 to 15, wherein the performing, by the first mini app management platform, verification on the first rich media message mini app based on the first request message, to obtain a verification result comprises:
obtaining, by the first mini app management platform, third information, wherein the third information comprises subscription information and/or configuration information corresponding to the rich media message terminal; and
determining, by the first mini app management platform, the verification result based on the first request message and the third information.

19. The method according to any one of claims 13 to 15, wherein the performing, by the first mini app management platform, verification on the first rich media message mini app based on the first request message, to obtain a verification result comprises:
obtaining, by the first mini app management platform, the first rich media message mini app based on the first request message;
performing, by the first mini app management platform, security scanning on the obtained first rich media message mini app; and
determining, by the first mini app management platform, the verification result based on a scanning result.

20. The method according to any one of claims 13 to 15, 18, and 19, wherein the verification result comprises a first verification result, a second verification result, or a third verification result, wherein the first verification result indicates that verification on the first rich media message mini app succeeds, the second verification result indicates that verification on the first rich media message mini app fails, and the third verification result indicates that verification on the first rich media message mini app partially succeeds.

21. A communication method, comprising:
obtaining, by a rich media message terminal, first information, wherein the first information comprises information about a first rich media message mini app and/or the first rich media message mini app;
sending, by the rich media message terminal, a first request message to a first mini app management platform, wherein the first request message comprises a part or all of the first information, the first request message is used to request the first mini app management platform to perform verification on the first rich media message mini app, and the first mini app management platform is a management platform that is capable of providing a rich media message mini app verification function;
receiving, by the first mini app management platform, the first request message, performing verification on the first rich media message mini app based on the first request message, to obtain a verification result, and sending a first response message to the rich media message terminal, wherein the first response message comprises the verification result; and
receiving, by the rich media message terminal, the first response message, and performing a corresponding operation on the first rich media message mini app based on the verification result.

22. The method according to claim 21, wherein the first request message is used to request the first mini app management platform to perform verification on security of the first rich media message mini app, or the first request message is used to request the first mini app management platform to verify whether the rich media message terminal is allowed to run the first rich media message mini app.

23. The method according to claim 21 or 22, wherein the method further comprises:
determining, by the rich media message terminal based on the first information, to request the first mini app management platform to perform verification on the first rich media message mini app.

24. The method according to any one of claims 21 to 23, wherein the verification result comprises one of the following:
a first verification result, a second verification result, a third verification result, and a fourth verification result, wherein the first verification result indicates that verification on the first rich media message mini app succeeds, the second verification result indicates that verification on the first rich media message mini app fails, the third verification result indicates that verification on the first rich media message mini app partially succeeds, and the fourth verification result is the information about the first rich media message mini app and/or the first rich media message mini app that correspond/corresponds to the first request message, and that are/is provided by the first mini app management platform.

25. The method according to any one of claims 1 to 24, wherein the first request message and the response of the first request message are rich media messages.

26. A communication apparatus, comprising a unit or a module configured to perform the method according to any one of claims 1 to 20.

27. A communication apparatus, comprising at least one processor, wherein
the at least one processor is configured to execute a computer program stored in a memory, to enable the apparatus to perform the method according to any one of claims 1 to 11, or
the at least one processor is configured to execute a computer program stored in a memory, to enable the apparatus to perform the method according to any one of claims 12 to 20.

28. A communication system, comprising a rich media message terminal and a first mini app management platform, wherein
the rich media message terminal is configured to perform the method according to any one of claims 1 to 12, and the first mini app management platform is configured to perform the method according to any one of claims 13 to 20.

29. A computer-readable storage medium, comprising a computer program, wherein
when the computer program is run on a computer, the computer is enabled to perform the method according to any one of claims 1 to 12; or
when the computer program is run on a computer, the computer is enabled to perform the method according to any one of claims 13 to 20.

30. A computer program product, wherein the computer program product comprises computer program code, wherein
when the computer program code is run on a computer, the computer is enabled to implement the method according to any one of claims 1 to 12; or
when the computer program code is run on a computer, the computer is enabled to implement the method according to any one of claims 13 to 20.
